# EUROPEAN PATENT SPECIFICATION

(11) **EP 4 293 332 B1**
(45) Date of publication and mention of the grant of the patent: **04.11.2026**
(21) Application number: 23176448.1
(22) Date of filing: 31.05.2023
(51) Int. Cl.: G01L 9/00, G01L 13/02, G01L 19/00, G01L 19/06

(54) **PRE-FORMED SOLID AS COUPLING MECHANISM IN MEDIA-ISOLATED PRESSURE SENSORS**
VORGEFORMTER FESTSTOFF ALS KUPPLUNGSMECHANISMUS IN MEDIENISOLIERTEN DRUCKSENSOREN
SOLIDE PRÉFORMÉ EN TANT QUE MÉCANISME DE COUPLAGE DANS DES CAPTEURS DE PRESSION ISOLÉS DE MILIEUX

(30) Priority: 14.06.2022 US 202217806911
(43) Date of publication of application: 20.12.2023
(73) Proprietor: Honeywell International Inc., Charlotte, NC 28202 (US)
(72) Inventor: Wade, Richard Andrew, Charlotte, 28202 (US)
(74) Representative: Haseltine Lake Kempner LLP

(56) References cited:
- EP-A1- 3 205 997
- EP-A1- 3 754 318
- US-A- 5 581 038
- US-A1- 2017 241 852
- US-A1- 2018 306 660

## Description

### TECHNOLOGICAL FIELD

Embodiments of the present disclosure relate generally to media-isolated pressure and/or force sensors.

### BACKGROUND

United States Patent Application Publication US 2018/0306660 A1 relates to a pressure sensor assembly having a printed circuit board (PCB) with a pressure sensor and a ring mounted on the PCB. The pressure sensor assembly may include a force transmitting member positioned at least partially within the ring. The force transmitting member may transfer a force applied to a front side of the force transmitting member to a front side of the pressure sensor. For example, the force transmitting member may be exposed to a fluid within a reservoir or other sensed media and may transmit forces of the fluid and/or other sensed media to the pressure sensor. The force transmitting member may include a biocompatible material to facilitate use of the pressure sensor assembly in medical and/or food related applications. One example biocompatible material usable in the force transmitting member may be cured silicone elastomer.

European Patent Application Publication EP 3205997 A1 relates to a packaged pressure sensor, comprising: a MEMS pressure-sensor chip; and an encapsulating layer of elastomeric material, in particular PDMS, which extends over the MEMS pressure-sensor chip and forms a means for transferring a force, applied on a surface thereof, towards the MEMS pressure-sensor chip.

United States Patent Application Publication US 2017/0241852 A1 relates to a flip chip pressure sensor assembly. The flip chip pressure sensor assembly comprises a substrate; a pressure sensor die comprising a sensing diaphragm, the die having a top side and a bottom side that is reverse to the top side, where the top side of the die is electrically connected to the substrate by flip chip mounting technology; a cover defining an aperture disposed over the pressure sensor die, where the aperture defined by the cover aligns with the sensing diaphragm to provide a path for pressure to be transmitted through the aperture to the bottom side of the sensing diaphragm; and a gel disk disposed within the aperture in intimate contact with a bottom side of the sensing diaphragm, where the gel disk is domed above an outer shoulder of a rim defined by the cover.

United States Patent US 5581038 A relates to a pressure measurement apparatus for measuring fluid pressures generated within a fluid passageway. The apparatus includes a semiconductor pressure transducer which is mounted to a chip carrier comprised of a ceramic substrate layer. The semiconductor pressure transducer is reverse mounted to the substrate layer by way of a series of electrically conductive epoxy bond points. The semiconductor pressure transducer is enclosed within a gel cap containing an incompressible gel medium. Fluid pressures generated within the fluid passageway are communicated to the transducer via the gel medium.

European Patent Application Publication EP 3754318 A1 relates to a micro pressure sensor including a sense die mounted on a substrate, a ring structure encircling the sense die, and a silicone material overmolded to an exterior of the ring structure to form a seal with the ring structure and fills an interior of the ring structure. The ring structure has one or more legs at bottom side, which are snap fitted to the substrate through mating holes such that the ring structure encircles the sense die; and a top surface of the silicone material receives the external pressure and transmits the external pressure to the sense surface of the sense die to generate an output signal on the sense die, wherein a processor converts the output signal into a pressure reading. The pressure-transmitting media transmits a received external pressure to the sense surface of the sense die to generate an output signal from the sense die, wherein a processor converts the output signal into a pressure reading.

Applicant has identified many technical challenges and difficulties associated with coupling mechanisms in media-isolated pressure and force sensors. Through applied effort, ingenuity, and innovation, Applicant has solved problems related to coupling mechanisms in media-isolated pressure and force sensors by developing solutions embodied in the present disclosure, which are described in detail below.

### BRIEF SUMMARY

Various embodiments are directed to an example mechanism for easily and reliably coupling external pressure and/or force from a measured media to pressure sensing circuitry of a media-isolated pressure sensor.

In accordance with embodiments of the present disclosure, an example media-isolated pressure sensor is provided utilizing a deformable solid as a coupling device. The media-isolated pressure sensor comprises a pressure sensing diaphragm that is coupled to a substrate of the media-isolated pressure sensor and a deformable solid. The deformable solid is configured to deform so as to substantially cover a sensing surface of the pressure sensing diaphragm to create a barrier between the pressure sensing diaphragm and a measured media. In addition, the deformable solid fluidly couples the measured media to the pressure sensing diaphragm such that in an instance in which a force is applied to the deformable solid by the measured media the force is transmitted to the pressure sensing diaphragm.

The media-isolated pressure sensor further comprises a pressure sensing die on which the pressure sensing diaphragm is disposed.

The pressure sensing diaphragm is disposed on the pressure sensing die opposite the substrate.

The media-isolated pressure sensor further comprises a ring seal assembly protruding from the substrate and defining a pressure sensing cavity, wherein, the ring seal assembly forms an enclosed perimeter around the pressure sensing die, and wherein the ring seal assembly extends from the substrate beyond the furthest extent of the pressure sensing diaphragm.

In some embodiments, the pressure sensing die may indicate a magnitude of the force applied by the measured media based on the deflection of the pressure sensing diaphragm.

In some embodiments, the pressure sensing diaphragm may further comprise piezoresistive sensors arranged in a Wheatstone bridge circuit and the magnitude of the force applied by the measured media may be determined based on the one or more output signals of the Wheatstone bridge circuit.

In some embodiments, the deformable solid may further deform to substantially fill the pressure sensing cavity.

In some embodiments, the pressure sensing diaphragm may be fluidly isolated from the measured media.

In some embodiments, the ring seal assembly may comprise an inner perimeter and an outer perimeter, wherein the inner perimeter is circular.

In some embodiments, the maximum cross-sectional diameter of the deformable solid may be greater than or equal to the diameter of the inner perimeter of the ring seal assembly.

In some embodiments, the deformable solid may be manufactured free of defects which change the fluid coupling properties over time.

In some embodiments, the measured media may be a fluid.

Another example media-isolated pressure sensor utilizing a deformable solid as a coupling device is further included. In some embodiments, the example media-isolated pressure sensor may comprise pressure sensing circuitry that is attached to a substrate of the media-isolated pressure sensor and comprising a pressure sensing diaphragm disposed on a pressure sensing die. In addition, the media-isolated pressure sensor comprises a ring seal assembly protruding from the substrate and defining a pressure sensing cavity, wherein the ring seal assembly extends from the substrate beyond the furthest extent of the pressure sensing diaphragm and forms an enclosed perimeter around the pressure sensing die. Further, the media-isolated pressure sensor comprises a coupling mechanism comprising a deformable solid that deforms to cover a sensing surface of the pressure sensing diaphragm, wherein the deformable solid fluidly couples the measured media to the pressure sensing diaphragm such that in an instance when a force is applied to the deformable solid by a measured media the force is transmitted to the pressure sensing diaphragm.

In some embodiments, the media-isolated pressure sensor may further comprise a vent in the substrate, fluidly connecting the pressure sensing cavity with an environment opposite the surface of the pressure sensing cavity.

In some embodiments, the substrate may be a printed circuit board.

In some embodiments, the pressure sensing die may be electrically connected to the printed circuit board using one or more through-hole connections.

At least one of the one or more through-hole connections fluidly connects the pressure sensing cavity with an environment opposite the substrate of the pressure sensing cavity.

In some embodiments, the pressure sensing die may indicate a magnitude of the force applied by the measured media based at least in part on the deflection of the pressure sensing diaphragm.

In some embodiments, the pressure sensing diaphragm may further comprise piezoresistive sensors arranged in a Wheatstone bridge circuit and the magnitude of the force applied by the measured media may be determined based on the one or more output signals of the Wheatstone bridge circuit.

An example coupling mechanism for a media-isolated pressure sensor is further included. The coupling mechanism comprises a deformable solid, wherein the deformable solid is configured to deform so as to substantially cover a sensing surface of a pressure sensing diaphragm so as to create a barrier between the pressure sensing diaphragm and a measured media. The deformable solid fluidly couples the measured media to the pressure sensing diaphragm such that in an instance in which a force is applied to the deformable solid by the measured media the force is transmitted to the pressure sensing diaphragm.

### BRIEF DESCRIPTION OF THE DRAWINGS

Reference will now be made to the accompanying drawings. The components illustrated in the figures may or may not be present in certain embodiments described herein. Some embodiments may include fewer (or more) components than those shown in the figures in accordance with an example embodiment of the present disclosure.
FIG. 1 illustrates a perspective view of an example media-isolated pressure sensor and a deformable solid in accordance with an example embodiment of the present disclosure.
FIG. 2 illustrates a cross-section view of an example media-isolated pressure sensor in accordance with an example embodiment of the present disclosure.
FIG. 3 illustrates a cross-section view of an example deformable solid overlaid on a cross-section view of an example media-isolated pressure sensor in accordance with an example embodiment of the present disclosure.
FIG. 4 illustrates a cross-section view of an example media-isolated pressure sensor positioned to determine a pressure reading associated with a measured media in accordance with an example embodiment of the present disclosure.

### DETAILED DESCRIPTION

Example embodiments will be described more fully hereinafter with reference to the accompanying drawings, in which some, but not all embodiments of the inventions of the disclosure are shown. Indeed, embodiments of the disclosure may be embodied in many different forms and should not be construed as limited to the embodiments set forth herein; rather, these embodiments are provided so that this disclosure will satisfy applicable legal requirements. Like numbers refer to like elements throughout.

Various example embodiments address technical problems associated with coupling an external pressure or force from a measured media with the pressure sensing circuitry in a media-isolated pressure sensor. As understood by those of skill in the field to which the present disclosure pertains, there are numerous scenarios in which pressure and/or force may be measured while maintaining isolation between the pressure sensing circuitry (e.g., pressure sensing die) and the measured media (e.g., fluid) producing a pressure. For example, medical staff may need to measure a patient's blood pressure through an intravenous line. In such a scenario, it is important that the pressure sensing die and other circuitry remain isolated from the patient's bodily fluid and from the incoming intravenous fluid to remain in compliance with medical standards. In addition, demand is high for media-isolated pressure sensors suitable for measuring pressure in a fluid media that can be manufactured at a low cost. As such, a low-cost mechanism is needed to transmit the pressure of the measured media (e.g., bodily fluid) to the pressure sensing die, while maintaining a barrier between the bodily fluid and the pressure sensing die.

Current coupling mechanisms suffer from a number of deficiencies. For example, pressure sensors produced using gel as a coupling device are time consuming to manufacture and flaws in the manufacturing process can often lead to inaccuracies in pressure readings. These gel-based coupling devices require a time-consuming process to ensure that no pockets of air or other irregularities exist in the gel before a calibration is performed. To allow sufficient time to remove all irregularities from the gel, substances must be added to the gel to prevent the gel from curing too quickly. Once the irregularities have been removed and the gel is in place, the gel may need to be manually cured before calibration. In some instances, the inhibitors to the curing process may continue to operate after a manual cure and calibration has occurred, causing the transmission properties of the gel to change over time and the pressure reading output to change over time. In addition, other media-isolated pressure sensors utilize rigid devices as a coupling mechanism which contact the pressure sensing diaphragm over a small surface area. These rigid coupling mechanisms often cause the pressure sensing diaphragm to bow under pressure, once again creating inaccuracies in the pressure reading output. Finally, some media isolated sensors utilize a sealed liquid or oil to act as a coupling mechanism. These devices can be prohibitively expensive to manufacture for many of the desired applications.

The various example embodiments described herein utilize various techniques to provide consistent pressure readings after calibration and reduce the cost of manufacturing of media-isolated pressure sensors. For example, in some embodiments, a deformable solid or plug may be used as a coupling device. The example deformable solid may be manufactured such that it is free of air bubbles and other irregularities that may cause a shift or change in the pressure readings over time. Further, utilizing the deformable solid removes, in some examples, the need to cure the coupling mechanism, further simplifying the manufacturing process and reducing the risk of changing coupling properties. In addition, the deformable solid may deform to contact the full surface of the pressure sensing diaphragm, leading to an even distribution of transmitted pressure across the diaphragm's surface. Such uniform contact with the sensing surface of the diaphragm leads to an output voltage that changes linearly with the applied pressure, providing a closer representation of the media applied pressure than when the coupling force is concentrated in a narrow area of the diaphragm's surface. Finally, the malleability of the deformable solid as a coupling mechanism enables the silicone or other material to substantially fill the ring seal assembly and isolate the measured media from the pressure sensing diaphragm and other pressure sensing circuitry.

As a result of the herein described example embodiments, the simplicity in manufacturing media-isolated pressure sensors may be greatly improved. In addition, the media-isolated pressure sensors utilizing a deformable solid as a coupling device may maintain greater accuracy over time.

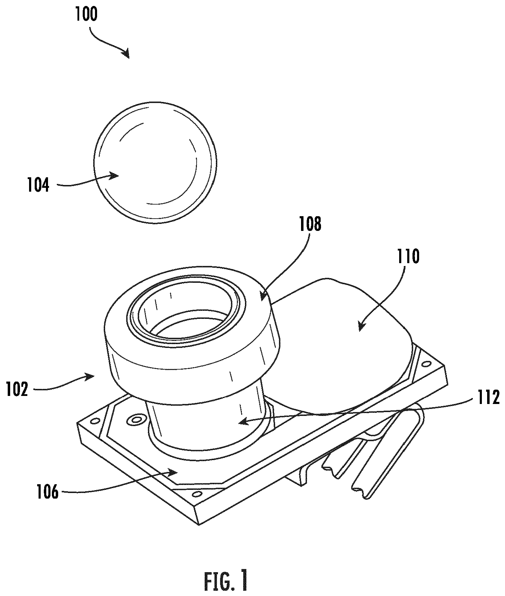

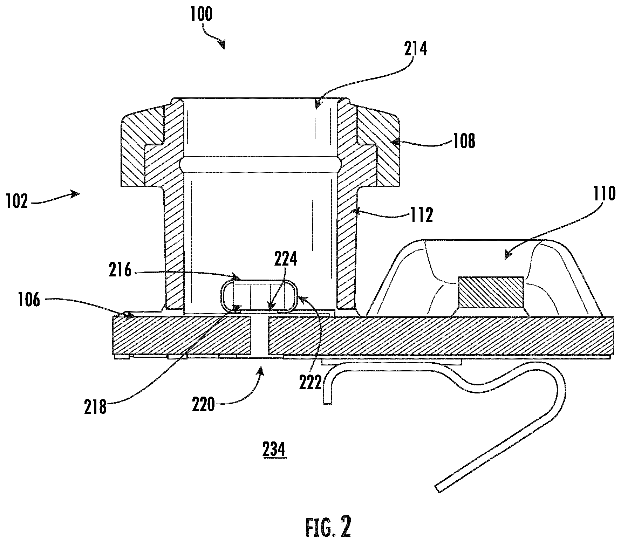

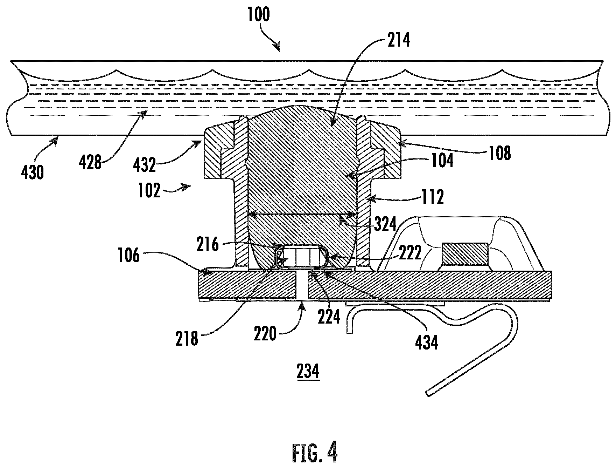

FIG. 1 illustrates a perspective view of an example media-isolated pressure sensor 100 and a deformable solid 104. As depicted in the example embodiment of FIG. 1, the media-isolated pressure sensor 100 includes a ring seal assembly 102 attached to a substrate (e.g., a printed circuit board (PCB) 106). The depicted ring seal assembly 102 forms a ring structure protruding from the surface of the substrate (e.g., PCB 106) and further includes a sealing structure 108 surrounding an outer surface at or near the upper portion of the ring seal assembly 102 for creating a seal between the ring seal assembly 102 and a fluid conduit 430 (as shown in FIG. 4). The depicted media-isolated pressure sensor 100 further includes a deformable solid 104 that once inserted into the interior of the ring seal assembly 102, substantially fills the volume of the ring seal assembly 102 and creates a coupling mechanism between the measured media and the pressure sensing circuitry (as shown in FIGS. 2-4). The example media-isolated pressure sensor 100 of FIG. 1 further depicts processing elements 110 disposed on the PCB 106 and communicatively connected to the pressure sensing circuitry of the media-isolated pressure sensor 100.

As illustrated in FIG. 1, the ring seal assembly 102 may be a part of a media-isolated pressure sensor 100 as described herein. The ring seal assembly 102 as illustrated in FIG. 1 comprises at least one ring seal sidewall 112 and a sealing structure 108 surrounding an outer surface of the at least one ring seal sidewall 112 for creating a seal between the media-isolated pressure sensor 100 and a fluid conduit (e.g., fluid conduit 430 containing a fluid for pressure measurement thereof). The at least one ring seal sidewall 112 defines an at least substantially smooth interior surface of the ring seal assembly 102 surrounding an interior of the at least one ring seal sidewall 112, and an at least substantially smooth exterior surface of the ring seal assembly 102 surrounding an exterior of the ring seal assembly 102. When configured as a portion of a pressure sensor, the ring seal assembly 102 structure is configured for enclosing the pressure sensing elements within the interior of the ring seal assembly 102, surrounded by the at least one ring seal sidewall 112. As shown in FIG. 1, the ring seal assembly 102 may have a circular tubular shape (characterized by a diameter and a length), although other configurations may be suitable for certain implementations. For example, the ring seal assembly 102 may have a rectangular cross-section (having four ring seal sidewalls 112), a triangular cross-section (having three ring seal sidewalls 112), a hexagonal cross-section (having six ring seal sidewalls 112), and/or the like.

The sidewalls of the ring seal assembly 102 may comprise a molded plastic material (e.g., Polysulfone, Polycarbonate, Acrylic, Stainless Steel, etc.), however it should be understood that other materials such as Teflon, glass, etc. may be used in certain embodiments. Embodying the at least one ring seal sidewall 112 of the ring seal assembly 102 as a molded plastic ring has the advantage of a low material cost and ease of manufacturing.

As further illustrated in FIG. 1, the deformable solid 104 may be a part of the media-isolated pressure sensor 100 as described herein. The deformable solid 104 as illustrated in FIG. 1 is an intact volume of incompressible material shaped to substantially match the cross-sectional shape of the interior surface of the ring seal assembly 102. The deformable solid 104 may be positioned in the hollow interior of the ring seal assembly 102 as an incompressible fluid to provide a fluid coupling mechanism between a measured media and the pressure sensing circuitry as further described in relation to FIG. 4. The deformable solid 104 may be pre-manufactured such that all or substantially all air pockets and/or other irregularities are removed from the body of the material. As shown in FIG. 1, the deformable solid 104 may have a spherical shape, although other configurations may be suitable for certain implementations. For example, the deformable solid 104 may have a cylindrical shape, spheroid shape, a triangular prism shape, a cubic or cuboid shape, a hexagonal prism shape, and/or the like. The coupling mechanism embodied by deformable solid 104 may be comprised of any incompressible fluid material capable of providing fluid coupling between the measured media and the pressure sensing circuitry, for example, silicone. In addition, the coupling mechanism embodied by deformable solid 104 may have the capability to deform to fit the shape defined by the interior of the ring seal assembly 102 such that the measured media is isolated from the pressure sensing circuitry. Embodying the coupling mechanism as a pre-manufactured, intact body has the advantage of simple assembly, as the deformable solid 104 does not require a process to remove unwanted pockets of air and subsequent curing time. In addition, a media-isolated pressure sensor 100 utilizing a deformable solid 104 as a coupling mechanism provides more consistent pressure readings after calibration is performed as the properties of the deformable solid 104 do not change over time due to a prolonged curing process and the deformable solid 104 applies and evenly distributed pressure across the surface of the pressure sensing circuitry.

FIG. 2 illustrates a cross-section view of an example media-isolated pressure sensor 100. As depicted in the example embodiment of FIG. 2, the media-isolated pressure sensor 100 includes a ring seal assembly 102 attached to a PCB 106 and defining at least one ring seal sidewall 112. The inner wall of the ring seal sidewall 112 defines a perimeter that surrounds the pressure sensing circuitry (e.g., the pressure sensing diaphragm 216 and the pressure sensing die 218). The pressure sensing die 218 is attached to the PCB 106 on one end while the pressure sensing diaphragm 216 is disposed on the opposite end. In addition, a through-hole conduit 220 defines an opening through the PCB 106, allowing the reference pressure of the environment 234 to interact with the bottom surface of the pressure sensing diaphragm 216. FIG. 2 further depicts a passage 224 through the wall of the pressure sensing die 218, allowing the pressure sensing diaphragm to electrically connect to the PCB 106 in a protected manner. The through-hole conduit 220, in combination with the passage 224, also provides fluid communication between the pressure sensing cavity 214 and the environment 234 on the opposite side of the PCB 106 when the opening to the pressure sensing cavity 214 defined by the ring seal assembly 102 is plugged by the coupling device. Further, the processing elements 110 are communicatively connected to the pressure sensing die 218 via defined electrical connections on the PCB 106.

As illustrated in FIG. 2, a pressure sensing die 218 may be a part of an example media-isolated pressure sensor 100 as described herein. The pressure sensing die 218 as depicted in FIG. 2, comprises a semiconductor material including at least one sidewall protruding from the surface of the PCB 106 and forming a perimeter around an interior opening. As shown in FIG. 2, the pressure sensing die 218 may define a rectangular cross-section perimeter (characterized by a length and a width) with an opening in the center, however, other solutions may be suitable for certain implementations, for example a pressure sensing die 218 having one sidewall forming a circular cross-section perimeter. The pressure sensing die 218 shown is attached to the PCB 106 on one end, while the distil end protrudes into the pressure sensing cavity, defining a space interior to the perimeter formed by the pressure sensing die 218.

The pressure sensing diaphragm 216, also depicted in FIG. 2, is formed such that the shape of the pressure sensing diaphragm 216 allows the pressure sensing diaphragm 216 to rest atop the pressure sensing die 218. In some embodiments, the top surface of the pressure sensing die 218 may be etched to form a recessed feature allowing the pressure sensing diaphragm 216 to securely sit within the bounds of the etched feature. The pressure sensing diaphragm 216 as depicted is formed of a semiconductor material. The pressure sensing diaphragm 216 may contain piezoresistive sensors arranged in a Wheatstone bridge circuit, such that pressure on and deflection of the pressure sensing diaphragm 216 creates a change in resistance in the disposed sensors and a voltage output correlated to the applied force. In the depicted example, the pressure sensing diaphragm 216 is disposed atop the at least one sidewall such that a substantial portion of the pressure sensing diaphragm 216 is suspended over the interior space created by the pressure sensing die 218. Placing the pressure sensing diaphragm 216 over the opening allows the pressure sensing diaphragm 216 to deflect in a manner, such that the change in the electrical properties of the pressure sensing diaphragm 216 are representative of the applied pressure. The pressure sensing die 218 further acts to elevate the pressure sensing diaphragm 216 above the surface of the PCB 106, isolating the pressure sensing die 218 from other pressures or vibrations that may disturb the pressure readings. The pressure sensing diaphragm electrically connects to the PCB 106 via through-hold connectors 222 passing through the passage 224 in the pressure sensing die 218, such that output signals resulting from applied pressure to the pressure sensing diaphragm 216 are transmitted from the pressure sensing die 218 and through connections made on the PCB 106 to the processing elements 110 to determine a pressure reading. By passing the through-hole connectors 222 through the passage 224 to the PCB 106, and making the electrical connections outside of the pressure sensing cavity 214, the electrical connections and soldered components of the pressure sensing die 218 may be protected from damage or shorts due to the inserted deformable solid 104. In addition, the through-hole conduit 220 provides a fluid connection between the pressure sensing cavity 214 and the environment 234 outside the pressure sensing cavity 214. Such a configuration allows air to escape through the through-hole conduit 220 when the deformable solid 104 is inserted into the pressure sensing cavity 214, preventing the creation of trapped air pockets.

As further illustrated in FIG. 2, the example media-isolated pressure sensor 100 may also include a through-hole conduit 220. As shown in FIG. 2, a through-hole conduit 220 defines an opening in the substrate (e.g., PCB 106) allowing the reference pressure of the environment 234 to interact with the bottom surface of the sensing die 218 to electrically connect to the PCB 106 on the surface opposite the pressure sensing die 218 using through-hole connectors 222. As shown in FIG. 2, the pressure sensing die 218 may be centered such that the interior opening of the pressure sensing die 218 aligns with the through-hole conduit 220, facilitating the interaction of the reference pressure from environment 234 with the bottom of the pressure sensing diaphragm. In some embodiments, the pressure sensing die 218 may be mounted to allow fluid connectivity from within the pressure sensing cavity 214 and into the through-hole conduit 220.

As further illustrated in FIG. 2, the example media-isolated pressure sensor 100 may also include processing elements 110. In some embodiments, the processing elements 110 may be configured to receive the output signals from the pressure sensing die 218 and convert the output signal into a pressure reading. In some embodiments, the processing elements 110 may output the pressure reading in analog format while in other embodiments, the processing elements 110 may output the pressure reading in a digital format. The processing elements 110 may further be utilized to calibrate and balance the piezoresistive sensors prior to distribution of the example media-isolated pressure sensor 100. In some embodiments, the processing elements 110 may comprise a processor, specially configured field programmable gate array (FPGA), specially programmed application specific integrated circuit (ASIC), trimmable film resistor network, or other similar computing device. Subsequent pressure readings may be determined based on this calibration.

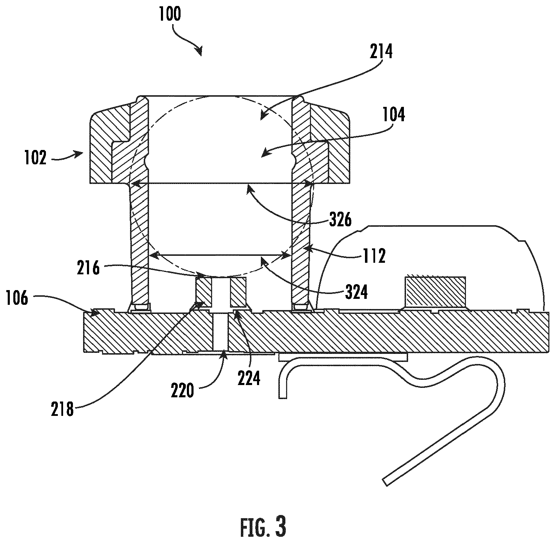

FIG. 3 illustrates a cross-section view of an example deformable solid 104 overlaid on a cross-section view of an example media-isolated pressure sensor 100. As depicted in the example embodiment of FIG. 3, the maximum cross-section diameter 326 of the deformable solid 104 is greater than the diameter of the inner perimeter 324 of the pressure sensing cavity 214.

Referring to FIG. 3, an example media-isolated pressure sensor 100 depicts an example relative size of the deformable solid 104 as compared to the ring seal assembly 102. As shown in the depicted embodiment, the maximum cross-section diameter 326 of the deformable solid 104 is greater than the diameter of the inner perimeter 324 of the ring seal assembly 102. While the depicted deformable solid 104 defines a maximum cross-section diameter 326 greater than the diameter of the inner perimeter 324 of the pressure sensing cavity 214, in some embodiments the maximum cross-section diameter 326 of the deformable solid 104 may be equal to or less than the diameter of the inner perimeter 324 of the pressure sensing cavity 214. In an instance in which the maximum cross-section diameter 326 of the deformable solid 104 is less than the diameter of the inner perimeter 324 of the pressure sensing cavity 214, the deformable solid 104 must have sufficient volume such that when the deformable solid 104 is forced into the pressure sensing cavity 214, the deformable solid 104 deforms to plug the entire cross-sectional area of the pressure sensing cavity 214 such that the deformable solid 104 fluidly isolates the pressure sensing circuitry from the measured media. In other words, no fluid from the measured media may penetrate the barrier created by the deformable solid 104 between the measured media and the pressure sensing circuitry. In some embodiments, the maximum cross-section diameter 326 of the deformable solid 104 may be between 1 and 5 millimeters, more preferably between 1.5 and 3.3 millimeters, most preferably between 2 and 2.8 millimeters. In some embodiments, the diameter of the inner perimeter 324 of the pressure sensing cavity 214 may be between 1 and 4 millimeters, more preferably between 1.5 and 3 millimeters, most preferably between 1.75 and 2.25 millimeters. The typical durometer of a deformable solid 104 may be between 0 and 20 on a Shore 00 scale, more preferably below 15 on a Shore 00 scale, and most preferably below 10 on a Shore 00 scale. Although, higher durometer materials may be used if the shape of the deformable solid 104 substantially matches the volume of the pressure sensing cavity 214.

FIG. 4 illustrates a cross-section view of an example media-isolated pressure sensor 100 positioned to determine a pressure reading associated with a fluid 428 in accordance with an example embodiment of the present disclosure. As depicted in the example embodiment of FIG. 4, a sealing structure 108 encircles the exterior surface proximate the upper end of the ring seal assembly 102. The upper end of the ring seal assembly 102 is inserted into an opening in a fluid conduit 430 carrying a measured media (e.g., fluid 428). The sealing structure 108 creates a seal between the opening 432 in the fluid conduit 430 and the media-isolated pressure sensor 100 such that the fluid 428 remains in the fluid conduit 430 and interacts with the deformable solid 104 positioned in the pressure sensing cavity 214 of the ring seal assembly 102.

As depicted in FIG. 4, a media-isolated pressure sensor 100 may be inserted into an opening 432 of a fluid conduit 430 to determine the pressure of a contained measured media (e.g., fluid 428). While the conduit from which pressure is being measured in FIG. 4 is a fluid conduit 430, the pressure of a measured media may be measured in any conduit, tube, cavity, enclosure, or other space. As illustrated in FIG. 4, in some embodiments, a fluid conduit 430 may contain an opening 432 substantially identical to the dimensions of the sealing structure 108 such that a fluid-tight seal is created between the opening 432 and the upper portion of the ring seal assembly 102 preventing undesired fluid leakage around the exterior of the sealing structure 108. Non-limiting examples of a fluid conduit 430 include an intravenous line, catheter, a fluid container, and/or the like.

As further depicted in FIG. 4, an example media-isolated pressure sensor 100 may include a sealing structure 108 encircling an exterior surface of the at least one ring seal sidewall 112 of the ring seal assembly 102 proximate an upper end of the ring seal assembly 102 (e.g., closer to the upper end of the ring seal assembly 102 than a opposite lower end of the ring seal assembly 102) and forming a protruding barrier between the upper end of the ring seal assembly 102 and the lower end of the ring seal assembly 102. In certain embodiments, the sealing structure 108 comprises a resilient material configured to form a fluid seal with an at least substantially smooth surface of a fluid conduit 430. For example, the sealing structure 108 may comprise rubber, silicone, or other resilient polymer material. In some embodiments, the ring seal assembly 102 may couple directly to the fluid conduit 430 without the aid of a sealing structure 108.

FIG. 4 further depicts a deformable solid 104 inserted into the pressure sensing cavity 214 of the ring seal assembly 102 and deformed to substantially fill the pressure sensing cavity 214. As described in relation to FIG. 3, due to the deformable and incompressible nature of the deformable solid 104, applying force to insert the deformable solid 104 into the pressure sensing cavity 214 may cause deformation of the deformable solid 104, such that the volume of the deformable solid 104 substantially fills the pressure sensing cavity 214. In addition to substantially filling the pressure sensing cavity 214, FIG. 4 further depicts the deformable solid 104 deforming to create a barrier between the pressure sensing circuitry and the measured media (e.g., fluid 428). Further, as the deformable solid 104 is forced into the pressure sensing cavity 214 formed by the ring seal assembly 102 and against the pressure sensing diaphragm 216, the deformable solid 104 deforms to substantially cover the sensing surface of the pressure sensing diaphragm 216. By deforming the coupling mechanism (e.g. the deformable solid 104) to substantially cover the sensing surface of the pressure sensing diaphragm 216, the pressure from the measured media (e.g., fluid 428) may be transmitted evenly across the sensing surface of the pressure sensing diaphragm 216. Even transmission across the entire sensing surface of the pressure sensing diaphragm 216 provides uniform stretching of the pressure sensing diaphragm 216 generating output voltages that change linearly with the media applied pressure and providing a closer representation of the media applied pressure than when the coupling force is concentrated in a narrow area of the diaphragm's surface. Further, by substantially filling the pressure sensing cavity 214, the deformable solid 104 fluidly couples the measured media (e.g., fluid 428) to the pressure sensing circuitry (e.g., pressure sensing diaphragm 216 and pressure sensing die 218), in other words, the deformable solid 104 provides a fluid pressure-transmitting media, transmitting a received external pressure to the surface of the pressure sensing diaphragm 216.

FIG. 4 further depicts a cavity vent 434, allowing the escape of air and other fluids and/or gasses from the pressure sensing cavity 214 through the PCB 106 and into the environment 234 opposite the PCB 106 from the ring seal assembly 102. In some embodiments, at the location where the pressure sensing die 218 is attached to the substrate (e.g., the PCB 106), the attaching mechanism may define gaps (e.g. cavity vent 434) between the bottom surface of the pressure sensing die 218 and the surface of the substrate. Such a gap may provide a cavity vent 434 from the pressure sensing cavity 214, through the defined gaps, through the through-hole conduit 220, and to the environment 234 opposite the PCB 106. By defining a cavity vent 434 from the pressure sensing cavity 214 to the environment 234 outside the pressure sensing cavity 214, air may escape through the cavity vent 434 as the deformable solid 104 is forced into the pressure sensing cavity 214. Allowing air to escape out the cavity vent 434 prevents problematic air bubbles from lodging at or above the pressure sensing diaphragm 216 can causing unreliable pressure readings.

Many modifications and other embodiments of the invention set forth herein will come to mind to one skilled in the art to which these inventions pertain having the benefit of teachings presented in the foregoing descriptions and the associated drawings. Although the figures only show certain components of the apparatus described herein, it is understood that various other components may be used in conjunction with the system. Therefore, it is to be understood that the inventions are not to be limited to the specific embodiments disclosed and that modifications and other embodiments are intended to be included within the scope of the appended claims. Moreover, although specific terms are employed herein, they are used in a generic and descriptive sense only and not for purposes of limitation. For example, while primarily described as a media-isolated pressure sensor, a person of ordinary skill in the art will recognize that a media-isolated pressure sensor as described above may also measure a force applied to the coupling mechanism and other forces resulting from the measured media interacting with the coupling mechanism.

While various embodiments in accordance with the principles disclosed herein have been shown and described above, modifications thereof may be made by one skilled in the art without departing from the teachings of the disclosure. The embodiments described
herein are representative only and are not intended to be limiting. Many variations, combinations, and modifications are possible and are within the scope of the disclosure. Alternative embodiments that result from combining, integrating, and/or omitting features of the embodiment(s) are also within the scope of the disclosure. Accordingly, the scope of protection is not limited by the description set out above.

Use of broader terms such as "comprises," "includes," and "having" should be understood to provide support for narrower terms such as "consisting of," "consisting essentially of," and "comprised substantially of" Use of the terms "optionally," "may," "might," "possibly," and the like with respect to any element of an embodiment means that the element is not required, or alternatively, the element is required, both alternatives being within the scope of the embodiment(s). Also, references to examples are merely provided for illustrative purposes, and are not intended to be exclusive.

## Claims

1. A media-isolated pressure sensor (100) comprising:
a substrate (106);
a pressure sensing die (218) attached to the substrate (106);
a pressure sensing diaphragm (216) disposed on the pressure sensing die (218) on a side of the pressure sensing die (218) opposite to the substrate (106),
wherein the pressure sensing diaphragm (216) is electrically connected to the substrate (106) via one or more through-hole connectors (222) passing through a passage (224) defined in a wall of the pressure sensing die (218);
a ring seal assembly (102) protruding from the substrate (106) and defining a pressure sensing cavity (214),
wherein the ring seal assembly (102) forms an enclosed perimeter around the pressure sensing die (218), and
wherein the ring seal assembly (102) extends from the substrate (106) beyond the furthest extent of the pressure sensing diaphragm (216);
a deformable solid (104) configured to deform so as to substantially cover a sensing surface of the pressure sensing diaphragm (216) to create a barrier between the pressure sensing diaphragm (216) and a measured media (428),
wherein the deformable solid (104) fluidly couples the measured media (428) to the pressure sensing diaphragm (216) such that, in an instance in which a force is applied to the deformable solid (104) by the measured media (428), the force is transmitted to the pressure sensing diaphragm (216); and
a through-hole conduit (220) defined in the substrate (106) configured to allow a reference pressure of an environment (234) to interact with a bottom surface of the pressure sensing diaphragm (216), and to provide, in combination with the passage (224), fluid communication between the pressure sensing cavity (214) and the environment (234) to allow air to escape when the deformable solid (104) is forced into the pressure sensing cavity (214).

2. The media-isolated pressure sensor (100) of claim 1, wherein the pressure sensing die (218) indicates a magnitude of the force applied by the measured media (428) based on a deflection of the pressure sensing diaphragm (216).

3. The media-isolated pressure sensor (100) of claim 2, wherein the pressure sensing diaphragm (216) further comprises piezoresistive sensors arranged in a Wheatstone bridge circuit and the magnitude of the force applied by the measured media (428) is determined based on the one or more output signals of the Wheatstone bridge circuit.

4. The media-isolated pressure sensor (100) of claim 1, wherein the deformable solid (104) further deforms to substantially fill the pressure sensing cavity (214).

5. The media-isolated pressure sensor (100) of claim 1, wherein the pressure sensing diaphragm (216) is fluidly isolated from the measured media (428).

6. The media-isolated pressure sensor (100) of claim 1, wherein the ring seal assembly (102) comprises an inner perimeter and an outer perimeter, and wherein the inner perimeter is circular.

7. The media-isolated pressure sensor (100) of claim 6, wherein the maximum cross-sectional diameter (326) of the deformable solid (104) is greater than or equal to the diameter of the inner perimeter (324) of the ring seal assembly (102) when the deformable solid (104) is not inserted into the ring seal assembly (102).

8. The media-isolated pressure sensor (100) of claim 1, wherein the deformable solid (104) comprises incompressible fluid material capable of providing fluid coupling between the measured media (428) and the pressure sensing diaphragm (216).

9. The media-isolated pressure sensor (100) of claim 1, wherein the measured media (428) is a fluid.

10. The media-isolated pressure sensor (100) of claim 1, further comprising a vent (434) in the substrate (106), wherein the vent (434) fluidly connects the pressure sensing cavity (214) with an environment (234) outside the pressure sensing cavity (214).

## Patentansprüche

1. Medienisolierter Drucksensor (100), umfassend:
ein Substrat (106);
einen Druckerfassungschip (218), der an dem Substrat (106) befestigt ist;
eine Druckerfassungsmembran (216), die auf dem Druckerfassungschip (218) auf einer dem Substrat (106) gegenüberliegenden Seite des Druckerfassungschips (218) angebracht ist,
wobei die Druckerfassungsmembran (216) über einen oder mehrere Durchlochverbinder (222), die durch einen in einer Wand des Druckerfassungschips (218) definierten Durchgang (224) hindurchgehen, elektrisch mit dem Substrat (106) verbunden ist;
eine Ringdichtungsbaugruppe (102), die aus dem Substrat (106) hervorragt und einen Druckerfassungshohlraum (214) definiert,
wobei die Ringdichtungsbaugruppe (102) einen umschlossenen Umfang um den Druckerfassungschip (218) ausbildet, und
wobei die Ringdichtungsbaugruppe (102) sich aus dem Substrat (106) über die weiteste Erstreckung der Druckerfassungsmembran (216) hinaus erstreckt;
einen verformbaren Feststoff (104), der dazu konfiguriert ist, sich so zu verformen, dass er im Wesentlichen eine Erfassungsoberfläche der Druckerfassungsmembran (216) bedeckt, um eine Barriere zwischen der Druckerfassungsmembran (216) und einem Messmedium (428) zu schaffen,
wobei der verformbare Feststoff (104) das Messmedium (428) fluidisch mit der Druckerfassungsmembran (216) derart koppelt, dass in einem Fall, in dem durch das Messmedium (428) eine Kraft auf den verformbaren Feststoff (104) angewendet wird, die Kraft auf die Druckerfassungsmembran (216) übertragen wird; und
ein Durchlochkanal (220) in dem Substrat (106) definiert ist, der dazu konfiguriert ist, es einem Referenzdruck einer Umgebung (234) zu erlauben, mit einer Bodenoberfläche der Druckerfassungsmembran (216) zu interagieren und in Kombination mit dem Durchgang (224), eine Fluidkommunikation zwischen dem Druckerfassungshohlraum (214) und der Umgebung (234) bereitzustellen, um es Luft zu erlauben, zu entweichen, wenn der verformbare Feststoff (104) in den Druckerfassungshohlraum (214) gepresst wird.

2. Medienisolierter Drucksensor (100) nach Anspruch 1, wobei der Druckerfassungschip (218) eine Magnitude der durch das Messmedium (428) angewendeten Kraft auf Basis einer Durchbiegung der Druckerfassungsmembran (216) angibt.

3. Medienisolierter Drucksensor (100) nach Anspruch 2, wobei die Druckerfassungsmembran (216) ferner piezoresistive Sensoren umfasst, die in einer Wheatstone-Brückenschaltung angeordnet sind und die Magnitude der durch das Messmedium (428) angewendeten Kraft auf Basis des einen oder der mehreren Ausgangssignale der Wheatstone-Brückenschaltung bestimmt wird.

4. Medienisolierter Drucksensor (100) nach Anspruch 1, wobei der verformbare Feststoff (104) sich ferner dazu verformt, den Druckerfassungshohlraum (214) im Wesentlichen zu füllen.

5. Medienisolierter Drucksensor (100) nach Anspruch 1, wobei die Druckerfassungsmembran (216) fluidisch von dem Messmedium (428) isoliert ist.

6. Medienisolierter Drucksensor (100) nach Anspruch 1, wobei die Ringdichtungsbaugruppe (102) einen Innenumfang und einen Außenumfang umfasst, und wobei der Innenumfang kreisförmig ist.

7. Medienisolierter Drucksensor (100) nach Anspruch 6, wobei der maximale Querschnittsdurchmesser (326) des verformbaren Feststoffs (104) größer als oder gleich dem Durchmesser des Innenumfangs (324) der Ringdichtungsbaugruppe (102) ist, wenn der verformbare Feststoff (104) nicht in die Ringdichtungsbaugruppe (102) eingefügt ist.

8. Medienisolierter Drucksensor (100) nach Anspruch 1, wobei der verformbare Feststoff (104) ein nicht komprimierbares Fluidmaterial umfasst, das dazu fähig ist, eine Fluidkopplung zwischen dem Messmedium (428) und der Druckerfassungsmembran (216) bereitzustellen.

9. Medienisolierter Drucksensor (100) nach Anspruch 1, wobei das Messmedium (428) ein Fluid ist.

10. Medienisolierter Drucksensor (100) nach Anspruch 1, ferner umfassend eine Entlüftung (434) in dem Substrat (106), wobei die Entlüftung (434) den Druckerfassungshohlraum (214) mit einer Umgebung (234) außerhalb des Druckerfassungshohlraums (214) fluidisch verbindet.

## Revendications

1. Capteur de pression isolé du milieu (100) comprenant :
un substrat (106) ;
une puce de détection de pression (218) fixée au substrat (106) ;
une membrane de détection de pression (216) disposée sur la puce de détection de pression (218) sur un côté de la puce de détection de pression (218) opposé au substrat (106),
dans lequel la membrane de détection de pression (216) est connectée électriquement au substrat (106) via un ou plusieurs connecteurs traversants (222) passant à travers un passage (224) défini dans une paroi de la puce de détection de pression (218) ;
un ensemble joint annulaire (102) faisant saillie à partir du substrat (106) et définissant une cavité de détection de pression (214),
dans lequel l'ensemble joint annulaire (102) forme un périmètre fermé autour de la puce de détection de pression (218), et
dans lequel l'ensemble joint annulaire (102) s'étend à partir du substrat (106) au-delà de la zone la plus éloignée de la membrane de détection de pression (216) ;
un solide déformable (104) configuré pour se déformer de sorte à couvrir sensiblement une surface de détection de la membrane de détection de pression (216) pour créer une barrière entre la membrane de détection de pression (216) et un milieu mesuré (428),
dans lequel le solide déformable (104) couple fluidiquement le milieu mesuré (428) à la membrane de détection de pression (216) de telle sorte que, dans un cas dans lequel une force est appliquée au solide déformable (104) par le milieu mesuré (428), la force est transmise à la membrane de détection de pression (216) ; et
un conduit traversant (220) défini dans le substrat (106) configuré pour permettre à une pression de référence d'un environnement (234) d'interagir avec une surface inférieure de la membrane de détection de pression (216), et pour assurer, en combinaison avec le passage (224), une communication fluidique entre la cavité de détection de pression (214) et l'environnement (234) pour permettre à l'air de s'échapper lorsque le solide déformable (104) est forcé à entrer dans la cavité de détection de pression (214).

2. Capteur de pression isolé du milieu (100) selon la revendication 1, dans lequel la puce de détection de pression (218) indique une intensité de la force appliquée par le milieu mesuré (428) sur la base d'une déflexion de la membrane de détection de pression (216).

3. Capteur de pression isolé du milieu (100) selon la revendication 2, dans lequel la membrane de détection de pression (216) comprend en outre des capteurs piézorésistifs agencés dans un circuit en pont de Wheatstone et l'intensité de la force appliquée par le milieu mesuré (428) est déterminée sur la base des un ou plusieurs signaux de sortie du circuit en pont de Wheatstone.

4. Capteur de pression isolé du milieu (100) selon la revendication 1, dans lequel le solide déformable (104) se déforme en outre pour remplir sensiblement la cavité de détection de pression (214).

5. Capteur de pression isolé du milieu (100) selon la revendication 1, dans lequel la membrane de détection de pression (216) est isolée fluidiquement du milieu mesuré (428).

6. Capteur de pression isolé du milieu (100) selon la revendication 1, dans lequel l'ensemble joint annulaire (102) comprend un périmètre interne et un périmètre externe, et dans lequel le périmètre interne est circulaire.

7. Capteur de pression isolé du milieu (100) selon la revendication 6, dans lequel le diamètre transversal maximal (326) du solide déformable (104) est supérieur ou égal au diamètre du périmètre interne (324) de l'ensemble joint annulaire (102) lorsque le solide déformable (104) n'est pas inséré dans l'ensemble joint annulaire (102).

8. Capteur de pression isolé du milieu (100) selon la revendication 1, dans lequel le solide déformable (104) comprend un matériau fluide incompressible apte à assurer un couplage fluidique entre le milieu mesuré (428) et la membrane de détection de pression (216).

9. Capteur de pression isolé du milieu (100) selon la revendication 1, dans lequel le milieu mesuré (428) est un fluide.

10. Capteur de pression isolé du milieu (100) selon la revendication 1, comprenant en outre un évent (434) dans le substrat (106), dans lequel l'évent (434) relie fluidiquement la cavité de détection de pression (214) à un environnement (234) à l'extérieur de la cavité de détection de pression (214).
